# EUROPÄISCHE PATENTSCHRIFT

(11) **EP 2 379 982 B1**
(45) Veröffentlichungstag und Bekanntmachung des Hinweises auf die Patenterteilung: **14.12.2016**
(21) Anmeldenummer: 09748070.1
(22) Anmeldetag: 20.10.2009
(51) Int. Cl.: G01B 11/275, G01B 21/04

(54) **VERFAHREN ZUR FAHRWERKSVERMESSUNG SOWIE VORRICHTUNG ZUM VERMESSEN DER FAHRWERKSGEOMETRIE EINES FAHRZEUGS**
METHOD FOR CHASSIS MEASUREMENT AND A DEVICE FOR MEASURING THE CHASSIS GEOMETRY OF A VEHICLE
PROCÉDÉ DE MESURE DU CHÂSSIS ET DISPOSITIF DE MESURE DE LA GÉOMÉTRIE DU CHÂSSIS D'UN VÉHICULE

(30) Priorität: 19.12.2008 DE 102008054975
(43) Veröffentlichungstag der Anmeldung: 26.10.2011
(73) Patentinhaber: Robert Bosch GmbH, 70442 Stuttgart (DE)
(72) Erfinder: Nobis, Guenter, 72622 Nuertingen (DE); Abraham, Steffen, 31134 Hildesheim (DE); Uffenkamp, Volker, 71642 Ludwigsburg (DE)
(86) Internationale Anmeldenummer: PCT/EP2009/063729
(87) Internationale Veröffentlichungsnummer: WO 2010/078976

(56) Entgegenhaltungen:
- US-A- 5 535 522
- US-A1- 2004 039 544

## Beschreibung

Die Erfindung betrifft ein Verfahren zur Fahrwerksvermessung sowie eine Vorrichtung zum Vermessen der Fahrwerksgeometrie eines Fahrzeugs.

### Stand der Technik

Aus der DE 107 57 763 und der EP 1 042 643 B1 ist eine Vorrichtung zum Bestimmen der Rad- und/oder Achsgeometrie von Kraftfahrzeugen mittels einer optischen Messeinrichtung mit mindestens zwei Bildaufnahmeeinrichtungen bekannt. Dabei handelt es sich um ein sogenanntes Stereomesssystem mit binokularen (Stereo-) Bildaufnahmeeinrichtungen. Solche binokularen Bildaufnahmeeinrichtungen sind aufwändig und teuer.

Bei anderen Achsmesssysteme, wie sie beispielsweise aus der US 613 47 92 bekannt sind, kommen Messtargets mit Passpunktfeldern zum Einsatz, die mit hoher Präzision hergestellt werden müssen und daher ebenfalls teuer sind. Des Weiteren können solche hoch präzisen Messtargets im Werkstattalltag leicht beschädigt oder deformiert werden, was zu unkontrollierbaren Messfehlern führt.

Weitere Vorrichtungen zum Bestimmen der Rad- und/oder Achsgeometrie sind in den Dokumenten US 2004/0039544 A1 und US 5535522 A gezeigt.

### Offenbarung der Erfindung

Es ist daher eine Aufgabe der vorliegenden Erfindung, ein zuverlässiges, kostengünstiges und genaue Messwerte lieferndes Achsvermessungsverfahren sowie eine zugehörige Achsvermessungsvorrichtung zur Verfügung zu stellen.

Diese Aufgabe wird durch den Gegenstand der unabhängigen Patentansprüche gelöst. Vorteilhafte Weiterbildungen ergeben sich aus den abhängigen Patentansprüchen.

Bei dem Verfahren zur Fahrwerksvermessung gemäß dem unabhängigen Anspruch 1 und der zugehörigen Vorrichtung zur Vermessung der Fahrwerksgeometrie eines Fahrzeugs gemäß dem unabhängigen Vorrichtungsanspruch 2 werden die Räder oder die an den Rädern angebrachten Messtargets mit monokularen Bildaufnahmeeinrichtungen in wenigstens zwei Lagen erfasst, und das Fahrzeug wird zwischen diesen Lagen durch Rollen der Räder bewegt. Um einen absoluten Maßstab bestimmen zu können, wird des Weiteren noch ein maßstabgebendes Element in wenigstens einer der Lagen des Fahrzeugs erfasst.

Bei dem Verfahren zur Fahrwerksvermessung nach Anspruch 1 und der zugehörigen Vorrichtung zum Vermessen der Fahrwerksgeometrie eines Fahrzeugs nach Anspruch 2 handelt es sich bei diesem maßstabgebenden Element um den Reifenaufstandspunkt in einem aufgenommenen Bild der Räder. Dieser Reifenaufstandspunkt lässt sich im aufgenommenen Bild des Rades bestimmen, und dessen horizontaler Abstand zur monokularen Bildaufnahmeeinrichtung kann aus deren Beobachtungswinkel und deren Beobachtungshöhe ermittelt werden. Daraus lässt sich der absolute Maßstab für die Messköpfe bestimmen.

Bei dem erfindungsgemäßen Verfahren und der Vorrichtung ist es ausreichend, den absoluten Maßstab nur an einem Rad zu bestimmen, weil man, wie unten beschrieben, einen gemeinsamen Maßstab für alle Räder herstellen kann.

Bei dem erfindungsgemäßen Verfahren und der erfindungsgemäßen Vorrichtung ergeben sich Kostenvorteile, da eine hochgenaue Fertigung von optischen Targets nicht notwendig ist, da auf eine zweite Bildaufnahmeeinrichtung für jeden Messkopf verzichtet werden kann und da ein Abstandsmesssensor nicht benötigt wird.

Das erfindungsgemäße Verfahren und die erfindungsgemäße Vorrichtung können sowohl mit Messtargets als auch ohne Messtargets verwirklicht werden.

Falls keine Messtargets zum Einsatz kommen, sondern die Räder selbst betrachtet werden, so werden natürliche Geometriedetails der Räder, wie beispielsweise eine Felgenkante, ein Ventil, ein Designelement oder ein Schriftzeichen auf der Reifenwand betrachtet.

Falls Messtargets zum Einsatz kommen, so benötigen diese kein Passpunktfeld, dadurch sind die Messtargets deutlich günstiger herstellbar, und unkontrollierbare Messfehler in Folge von Deformation oder Beschädigung von Präzisionstargets mit Passpunktfeldern im Werkstattalltag können zuverlässig vermieden werden.

Des Weiteren ist das erfindungsgemäße Verfahren einfach durchführbar und die zugehörige Vorrichtung einfach bedienbar. Wenn Targets zum Einsatz kommen, ist eine genaue Positionierung der Radadapter von solchen Targets zur Drehachse nicht notwendig.

An den Rädern oder an den Targets vorhandene Geometriedetails werden erfindungsgemäß mit monokularen Bildaufnahmevorrichtungen in mindestens zwei Lagen erfasst.

Die Auswertung der monokularen Bildfolgen von wenigstens zwei Bildern des betreffenden Rads bzw. des daran angebrachten Messtargets zur Bestimmung geometrischer Größen erfolgt mittels bekannter Verfahren aus der Bildbearbeitung gemäß dem Prinzip "structure from motion" und mittels deren Anwendung für die dreidimensionale Fahrwerksvermessung.

Aus den in allen aufgenommenen Bildern gemessenen 2D-Bildkoordinaten der abgebildeten Geometriedetails ergeben sich deren 3D-Koordinaten in einem lokalen Rad-Koordinatensystem, die Translations- und Rotationsvektoren des Fahrzeugs und die Drehwinkel des Rades zwischen den Lagen sowie die zur Achsvermessung erforderlichen Informationen in Form von 3D-Position des Drehzentrums und räumlichen Richtung der Drehachse. Dieser Berechnungsschritt wird nachfolgend als 3D-Rekonstruktion bezeichnet. Dieser ist dem Fachmann bekannt und braucht hier nicht weiter erläutert zu werden.

Nach erfolgter 3D-Rekonstruktion bilden die Positionen der Geometriedetails im Rad-Koordinatensystem ein Passpunktsystem, so dass nachfolgende Messungen bei stehendem Fahrzeug zum Beispiel zur Einstellung von Spur und Sturz bei erkannter Fehlstellung des Rades durchgeführt werden können. Die 3D-Rekonstruktion bestimmt lediglich die Form des Rad-Koordinatensystems, nicht dessen Maßstab. Jede monokulare Bildaufnahmevorrichtung berechnet ihr zugehöriges Rad-Koordinatensystem mit einem lokalen Maßstab, der bei der Rekonstruktion beliebig vorgegeben wird.

Für diejenigen Messwerte der Achsvermessung, die im Wesentlichen auf der Berechnung von Winkeln beruhen, müssen die Maßstäbe aller Bildaufnahmevorrichtungen weder identisch noch absolut bekannt sein. Erst wenn zusätzlich metrische Messwerte zu bestimmen sind oder die Einzelspur der Hinterräder, müssen die lokalen Maßstäbe aufeinander angepasst werden. Im Folgenden wird ein für alle Bildaufnahmevorrichtungen gemeinsamer Maßstab als globaler Maßstab bezeichnet. Durch Einführung einer zusätzlichen, maßhaltigen, externen Information wird der globale Maßstab auf einen absoluten Maßstab angepasst.

Eine zusätzliche Erfassung von Geometriedetails an der Karosserie steigert die Genauigkeit der Bestimmung der Translations- und Rotationsvektoren zwischen den Lagen.

Die Erfindung wird im Folgenden anhand von Beispielen und Ausführungsbeispielen mit Bezug auf die beiliegenden Figuren ausführlicher beschrieben. Dabei zeigen:
- Figur 1: die schematische Darstellung einer Vorrichtung zum Vermessen der Fahrwerksgeometrie eines Fahrzeugs, sowie eines Fahrzeugs in der Ausgangs- und der Endlage von oben;
- Figur 2: schematisch die 3D-Rekonstruktion einer Achsgeometrie ohne globalen Maßstab;
- Figur 3: eine schematische Seitenansicht des linken Vorderrads und des das linke Vorderrad umgebenden Bereichs der Karosserie gemäß einem Beispiel einer Vorrichtung zum Vermessen der Fahrwerksgeometrie eines Fahrzeugs;
- Figur 4: zeigt eine schematische Frontansicht des linken Vorderrads und des daneben angeordneten linken vorderen Messkopfes gemäß einem Beispiel einer erfindungsgemäßen Vorrichtung zum Vermessen der Fahrwerksgeometrie eines Fahrzeugs;
- Figur 5: zeigt anhand ihrer Teilfiguren 5(a) und 5(b) schematische Seitenansichten des linken Vorderrads und des das linke Vorderrad umgebenden Bereichs der Karosserie sowie eine daneben angeordnete Bildaufnahmeeinrichtung gemäß einem weiteren Beispiel einer Vorrichtung zum Vermessen der Fahrwerksgeometrie eines Fahrzeugs; und
- Figur 6: zeigt eine schematische Seitenansicht des linken Vorderrads, des das linke Vorderrad umgebenden Bereichs der Karosserie und von zwei Referenztargets an dem Messplatz sowie eine daneben angeordnete Bildaufnahmeeinrichtung gemäß einem weiteren Beispiel einer Vorrichtung zum Vermessen der Fahrwerksgeometrie eines Fahrzeugs.

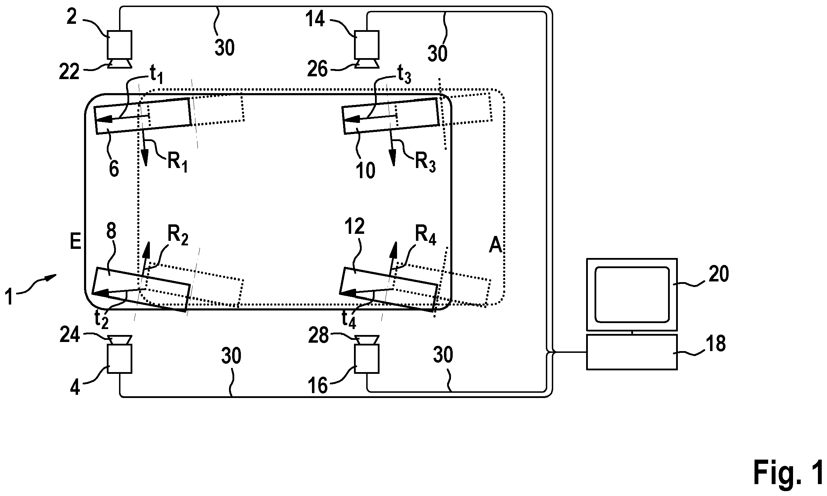

Figur 1 zeigt die schematische Darstellung einer Vorrichtung zum Vermessen der Fahrwerksgeometrie eines Fahrzeugs von oben.

Die Vorrichtung weist vier Messköpfe 2, 4, 14, 16 auf, die jeweils paarweise einander gegenüberliegend auf beiden Seiten eines Fahrzeugs 1 angeordnet sind. Die Messköpfe 2, 4, 14, 16 weisen auf ihrer dem Fahrzeug 1 zugewandten Seite je eine monokulare Bildaufnahmeeinrichtung 22, 24, 26, 28 auf, die z. B. als Kamera ausgestaltet ist. Die Position der Messköpfe 2, 4, 14, 16 im Koordinatensystem des Messplatzes ist bekannt und wird während der Messung nicht verändert.

Das Fahrzeug 1 weist vier Räder 6, 8, 10, 12 auf und ist so zwischen den Messköpfen 2, 4, 14, 16 angeordnet, dass jeweils eines der Räder 6, 8, 10, 12 im Blickfeld einer der Bildaufnahmeeinrichtungen 22, 24, 26, 28 positioniert ist. Die Messköpfe 2, 4, 14, 16 sind über Datenleitungen 30 mit einer Auswerteeinrichtung 18 zum Auswerten der von den Messköpfen 2, 4, 14, 16 aufgenommenen und ermittelten Daten verbunden. Die Auswerteeinrichtung 18 ist mit einer Anzeige 20 zum Anzeigen der Ergebnisse der Messung verbunden. Weiterhin ist die Auswerteeinrichtung 18 mit einer in der Figur 1 nicht gezeigten Eingabevorrichtung, z.B. einer Tastatur, zum Steuern der Auswerteeinrichtung 18 versehen.

In der Figur 1 ist das Fahrzeug 1 in einer mit gestrichelten Linien dargestellten Anfangslage A und einer mit durchgezogenen Linien dargestellten Endlage E dargestellt. Die Endlage E befindet sich in horizontaler Richtung links neben der Anfangslage A.

Zur Durchführung der Messung wird zunächst jedes der Räder 6, 8, 10, 12 in der Anfangslage A des Fahrzeugs 1 von jeweils einer der Bildaufnahmeeinrichtungen 22, 24, 26, 28 erfasst und die Position eines Geometriedetails des jeweiligen Rades 6, 8, 10, 12 im lokalen Koordinatensystem des jeweiligen Messkopfes 2, 4, 14, 16 bestimmt. Die Geometriedetails bilden kein Passpunktsystem.

Die Geometriedetails können natürliche Geometriedetails des Rades 6, 8, 10, 12, wie z. B. eine Felgenkante, ein Ventil, ein Design-Element oder Schriftzeichen oder ein auf dem Rad 6, 8, 10, 12 aufgebrachtes Messtarget sein. Durch das Verwenden natürlicher Geometriedetails kann der Schritt des Aufbringens und späteren Abnehmens von Messtargets eingespart werden, so dass die Messung schneller durchgeführt werden kann. Andererseits weisen Messtargets einen hohen Kontrast auf und sind daher von den Bildaufnahmeeinrichtungen 22, 24, 26, 28 besonders gut zu erkennen. Messtargets ermöglichen so insbesondere auch bei schlechten Lichtverhältnissen eine genaue Fahrwerksvermessung.

Da es sich bei den Bildaufnahmeeinrichtungen 22, 24, 26, 28 um monokulare Bildaufnahmeeinrichtungen 22, 24, 26, 28 handelt, kann die Position der Geometriedetails im dreidimensionalen Koordinatensystem des jeweiligen Messkopfes 2, 4, 14, 16 nur bis auf einen unbekannten Maßstabsfaktor zwischen lokalem und absolutem Maßstab bestimmt werden, beziehungsweise zwischen globalem und absolutem Maßstab, wenn die lokalen Maßstäbe aneinander angepasst wurden.

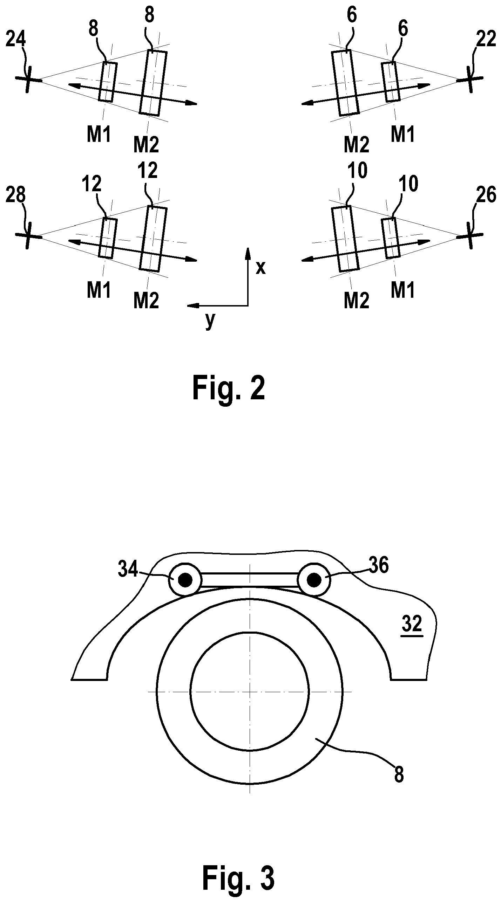

Figur 2 veranschaulicht diese Maßstabsunsicherheit beispielhaft. In Figur 2 ist eine 3D-Rekonstruktion der Räder 6, 8, 10, 12 für zwei beispielhafte Maßstäbe M1 und M2 dargestellt. Aus der Figur 2 wird deutlich, dass eine Änderung des Maßstabs zu einer Skalierung aller Streckenlängen um den gleichen Faktor führt. Die Abbildung eines großen, entfernten Objektes, hier der Räder 6, 8, 10, 12 mit dem Maßstab M2, ist identisch mit den maßstäblich verkleinerten Räder 6, 8, 10, 12 mit dem Maßstab M1, die sich in geringerer Entfernung von der jeweiligen Bildaufnahmeeinrichtung 22, 24, 26, 28 befinden.

Wieder Bezug nehmend auf Figur 1 wird das Fahrzeug 1 in die Endlage E bewegt und die Position der Geometriedetails in den Bildern erneut bestimmt, nachdem die Position der Geometriedetails in den Bildern der Anfangslage A des Fahrzeugs 1 bestimmt worden ist.

Aus der Differenz der Geometriedetails in den Bildern in der Anfangslage A des Fahrzeugs 1 und der Endlage E des Fahrzeugs 1 und der Formulierung einer dreidimensionalen Bewegung eines starren Körpers zwischen den zwei Lagen unter Einführung der Drehzentren, der Drehachsen und der Drehwinkel der Räder können nun die Translationsvektoren t1, t2, t3 und t4 und die Rotationsvektoren R1, R2, R3 und R4 der Räder 6, 8, 10, 12 bestimmt werden. Dies kann entweder durch eine Logik im jeweiligen Messkopf 2, 4, 14, 16 oder in der Auswerteeinrichtung 18 erfolgen.

Da das Fahrzeug 1 für diese Messung als starrer Körper anzusehen ist, verändert sich die relative Position der Räder 6, 8, 10, 12 zueinander nicht, wenn das Fahrzeug 1 von der Anfangslage A in die Endlage E bewegt wird. Die Translationsvektoren t1, t2, t3 und t4 der Räder 6, 8, 10, 12 müssen daher im globalen Koordinatensystem die gleiche Länge aufweisen. Daher können die vier lokalen Maßstäbe der Messköpfe 2, 4, 14, 16 auf einen gemeinsamen, globalen Maßstab reduziert werden, indem die Translationsvektoren t1, t2, t3 und t4, so skaliert werden, dass sie die gleiche Länge aufweisen.

Zum Skalieren der Translationsvektoren t1, t2, t3 und t4 und zum Anpassen auf einen gemeinsamen Maßstab muss die Erfassung aller vier Räder 6, 8, 10, 12 durch die Bildaufnahmeeinrichtungen 22, 24, 26, 28 der Messköpfe 2, 4, 14,16 zeitlich synchronisiert werden, damit die vier Räder 6, 8, 10, 12 jeweils in der gleichen Lage des Fahrzeugs 1 erfasst werden.

In der einfachsten Variante wird das Fahrzeug 1 wie zuvor beschrieben in wenigstens zwei Lagen, z. B. in einer Anfangslage A und in einer Endlage E, angehalten und die Positionen der Geometriedetails werden in diesen beiden Lagen des Fahrzeugs 1 bestimmt. Eine zusätzliche zeitliche Synchronisation der Bildaufnahmezeitpunkte ist dann nicht erforderlich. Das Fahrzeug 1 kann auch in weiteren Lagen angehalten werden, um die Positionen der Geometriedetails in diesen Lagen zu bestimmen und die Genauigkeit der Messung zu erhöhen.

Aus den gemessenen Daten können mittels bekannten Verfahren die Drehachse und das Drehzentrum der Räder 6, 8, 10, 12 im Koordinatensystem des jeweiligen Messkopfes 2, 4, 14, 16 bestimmt werden.

Diese Auswertung kann radweise, d.h. getrennt für alle vier Räder 6, 8, 10, 12, achsweise, d.h. gemeinsame für die gegenüberliegenden Räder 6, 8, 10, 12 einer Achse oder gemeinsam für alle Räder 6, 8, 10, 12 erfolgen. Für die achsweise Auswertung und die gemeinsame Auswertung aller Räder 6, 8, 10, 12 muss eine zeitliche Synchronität der Aufnahmen hergestellt werden.

Zusätzlich zu den Geometriedetails der Räder 6, 8, 10, 12 können Geometriedetails auf der Karosserie des Fahrzeugs 1 erfasst werden, um Lenk- und Federbewegungen des Fahrzeugs 1 zu erfassen und mathematisch zu kompensieren.

Wie beschrieben, sind die 3D-Koordinaten jedes Messkopfes nur bis auf einen Maßstabsfaktor bestimmbar, d.h. die Form der rekonstruierten 3D-Punktwolke ist bekannt, nicht jedoch ihre Größe (siehe Fig. 2). Ein gemeinsamer Maßstab wird aus dem Abgleich der Translationsvektoren t1, t2, t3 und t4 erhalten, welche die Bewegung der Geometriedetails im Raum beschreiben.

Aus Figur 2 ist jedoch erkennbar, dass die Skalierung auf einen gemeinsamen Maßstab zu keiner Änderung der Winkel zwischen den Strecken führt. Daher sind diese Winkel, wie z. B. der Sturz der Räder 6, 8, 10, 12, die Einzelspur der Vorderachse sowie die Gesamtspur der Vorder- und Hinterachse unabhängig vom globalen Maßstab und damit ohne Kenntnis des gemeinsamen Maßstabs bestimmbar.

Messgrößen, die Streckenlängen erfordern, hängen dagegen vom gemeinsamen, absoluten Maßstab ab. Dies betrifft z. B. die Berechnung des Radstandes und der Spurweite oder der Fahrzeuglängsmittelebene M, die für die Berechnung der Einzelspur der Hinterachse benötigt wird.

Die Kenntnis des gemeinsamen, absoluten Maßstabs ist jedoch zur Berechnung der Einzelspur der Hinterachse nicht erforderlich, wenn die Messköpfe 2, 4, 14, 16 mit den Bildaufnahmeeinrichtungen 22, 24, 26, 28 exakt symmetrisch auf beiden Seiten des Fahrzeugs 1 angeordnet sind und die Bewegung des Fahrzeugs 1 exakt gradlinig durch die Messköpfe 2, 4, 14, 16 erfolgt. Somit kann durch eine symmetrische Positionierung der Messköpfe 2, 4, 14, 16 bzw. durch eine symmetrische Ausrichtung des Fahrzeugs 1 zwischen den fest montierten Messköpfen 2, 4, 14, 16 eine exakte Bestimmung der Längsmittelebene M des Fahrzeugs 1 erfolgen und damit die Einzelspur der Hinterräder 10, 12 exakt bestimmt werden.

Figur 3 zeigt als Beispiel eine schematische Seitenansicht des linken Vorderrads 8 und des das linke Vorderrad 8 umgebenden Bereichs der Karosserie 32.

Bei diesem Bereich der Karosserie 32 handelt es sich um den Kotflügel. Oberhalb der Radhauskante sind zwei Referenztargets 34 und 36 an dem Kotflügel angebracht. Die Referenztargets 34 und 36 sind als ebene Kreismarken ausgebildet, und deren Durchmesser ist auf die optischen Abbildungsverhältnisse zwischen dem Objektraum und der Bildebene der Bildaufnahmeeinrichtung 22, 24, 26 und 28 abgestimmt. Die Referenztargets 34 und 36 beinhalten ein bekanntes Muster, das in Figur 3 exemplarisch als mittiger dunkler Referenzpunkt und als ein diesen umgebender heller, insbesondere reflektierender Kreisring ausgebildet ist. Der Durchmesser des dunklen Referenzpunkts und die Abmessung des diesen umgebenden hellen Kreisrings sind bekannt.

In der Praxis hat sich herausgestellt, dass die in Figur 3 dargestellte Ausbildung der Referenztargets 34 und 36 mit einem dunklen mittigen Referenzpunkt und einen diesen umgebenden hellen, insbesondere reflektierenden Kreisring von den Abbildungseinrichtungen besonders zuverlässig erkannt wird. Andere Formen für die Referenztargets sind jedoch ebenfalls möglich.

Im Betrieb der Vorrichtung zum Vermessen der Fahrwerksgeometrie nach Figur 1 wird wenigstens eines der beiden Referenztargets 34 und 36 zusammen mit dem Rad 8 oder dem daran angebrachten Target aufgenommen. Durch Vergleich der Bilder des wenigstens einen aufgenommenen Referenztargets 34 und 36 mit den tatsächlichen geometrischen Dimensionen für dieses Referenztarget, das der Auswerteeinrichtung bekannt ist, kann der absolute Maßstab bestimmt werden. Dabei reicht es aus, wenn eines der beiden Referenztargets 34 und 36 in einer Fahrzeugposition, insbesondere der Anfangsposition oder der Endposition des Fahrzeugs, aufgenommen wird. Weitere Aufnahmen können die Genauigkeit der Bestimmung des absoluten Maßstabs erhöhen.

Durch die bestimmbaren Translationsvektoren, Rotationsvektoren und Radwinkel zwischen den mindestens zwei Fahrzeugpositionen, der Raddrehzentren und der Raddrehachsen der Räder und durch die Bestimmung des absoluten Maßstabs für die Messköpfe können sämtliche relevanten Fahrwerksvermessungsparameter, insbesondere Sturz, Einzel- und/oder Gesamtspur, Radstand und Spurweite mit hoher Genauigkeit bestimmt werden.

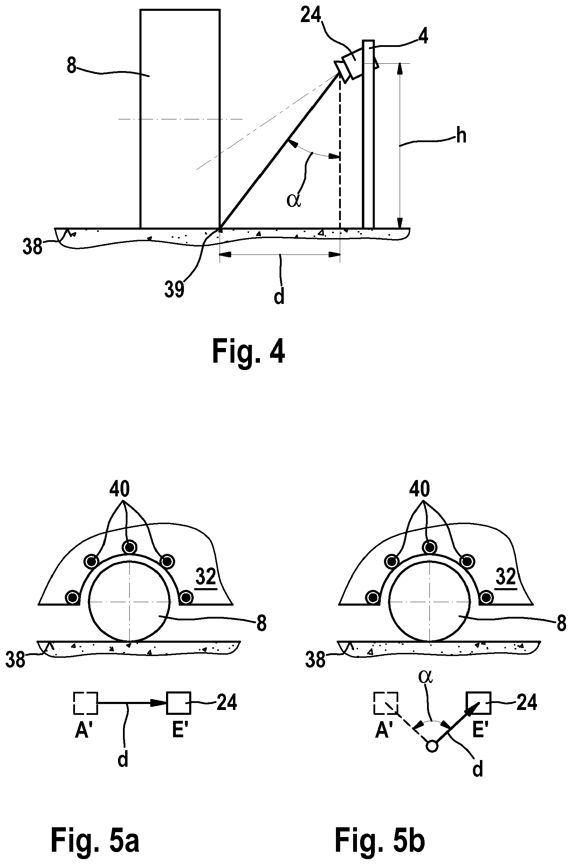

Figur 4 zeigt eine schematische Frontansicht des linken Vorderrads 8, wobei aus Anschauungsgründen die Karosserie 32 weggelassen worden ist, und des daneben angeordneten linken vorderen Messkopfes 4 gemäß einem Ausführungsbeispiel der Erfindung.

Die Bildaufnahmeeinrichtung 24 des Messkopfes 4 ist in einer Höhe h über der Fahrbahnebene 38 angeordnet, und sie ist in einem Winkel α zur Vertikalen und damit in einem Winkel 90° - α zur Fahrbahnebene 38 ausgerichtet.

Im Betrieb der erfindungsgemäßen Vorrichtung zum Vermessen der Fahrwerksgeometrie eines Fahrzeugs nimmt die Bildaufnahmeeinrichtung 24 einen Bildbereich des Vorderrads 8 auf, der groß genug ist, dass auch der Reifenaufstandspunkt 39 darin liegt. Durch eine Bildauswertung lässt sich der Reifenaufstandspunkt, beispielsweise als Grenze zwischen dem dunklen Reifen und dem helleren Messplatz bestimmen, und der horizontale Abstand d dieses Reifenaufstandspunkts zur Bildaufnahmeeinrichtung 24 lässt sich anhand der bekannten Höhe h und des bekannten Ausrichtungswinkels α bestimmen. Dadurch erhält man den absoluten Maßstab, so dass alle relevanten Fahrwerksparameter, insbesondere Sturz, Einzel- und/oder Gesamtspur, Radstand und Spurweite ermittelt werden.

Eine eine einmalige Betrachtung des Reifenaufstandspunkt 39, beispielsweise in der Anfangs- oder Endposition des Fahrzeugs, für die Bestimmung des absoluten Maßstabs ausreichend, durch mehrere Betrachtungen kann die Genauigkeit des bestimmten absoluten Maßstabs noch erhöht werden.

Mit anderen Worten kann gemäß Figur 4 eine zum Reifenaufstandspunkt 39 zugehörige 3D-Koordinate im globalen Koordinatensystem H zu jedem Zeitpunkt j der Messung als Schnitt des Abbildungsstrahls mit der Fahrbahnebene berechnet werden. Der für die 3D-Rekonstruktion fehlende Maßstab ist bestimmbar.

Figur 5 zeigt anhand ihrer Teilfiguren 5(a) und 5(b) schematische Seitenansichten des linken Vorderrads 8 und des das linke Vorderrad 8 umgebenden Bereichs der Karosserie 32 sowie eine daneben angeordnete Bildaufnahmeeinrichtung 24 gemäß weiteren Beispielen.

In den Figuren 5(a) und 5(b) sind schematisch Messtargets 40 an dem Kotflügel, insbesondere an der Radhauskante angeordnet, und an dem Rad 8 ist kein Messtarget gezeigt. Erfindungsgemäß ist es möglich, sowohl das Rad direkt oder ein darauf angebrachtes Target zu betrachten. Die Messtargets 40 an der Karosserie 32 sind dabei optional und können auch weggelassen werden.

Die eigentliche Vermessung durch die Messköpfe 2, 4, 14, 16 erfolgt, wie mit Bezug auf Figur 1 beschrieben, durch Aufnahmen der der Räder 6, 8, 10, 12 oder der darauf angebrachten Targets durch die Messköpfe 2, 4, 14, 16 wenigstens in der Anfangslage A und in der Endlage E des Fahrzeugs 1, und das Fahrzeug wird dazwischen bewegt.

Figur 5(a) und 5(b) zeigen eine weitere Möglichkeit zur Bestimmung des fehlenden Maßstabes. Die erforderlichen Messungen der Bildaufnahmeeinrichtungen aus deren Anfangsposition A' und deren Endposition E' erfolgen dabei bei stillstehendem Fahrzeug. Insbesondere steht das Fahrzeug 1 dabei entweder in seiner Anfangslage A oder in seiner Endlage E.

Von den Bildaufnahmeeinrichtungen wird eine erste Bildaufnahme des Rad bzw. des darauf angebrachten Targets aus der Anfangsposition A' und aus eine zweite Bildaufnahme des Rads bzw. des darauf angebrachten Targets aus der Endposition E' gemacht. Die Bildaufnahmeeinrichtungen werden dazwischen von ihrer Anfangsposition A' in ihre Endposition E' bewegt, wie dies in den Figuren 5(a) und 5(b) für die linke vordere Bildaufnahmeeinrichtung 24 schematisch gezeigt ist. Es wird demgemäß ein Stereomesskamerasystem nachgebildet.

Es ist ausreichend, derartige Bildaufnahmen und eine derartige Verschiebung nur mit einem Messkopf durchzuführen. Dadurch kann der absolute Maßstab für ein Rad bestimmt werden, was ausreicht, weil man ja einen gemeinsamen Maßstab für alle Räder herstellen kann.

Die Anfangsposition A' und die Endposition E' der Bildaufnahmeeinrichtungen sind der Auswerteeinrichtung bekannt oder bestimmbar, beispielsweise kann die Anfangsposition A' und die Richtung und Länge der Verschiebebewegung der Auswerteeinrichtung bekannt sein, so dass daraus die Endposition E' ermittelt werden kann.

Durch die Erfassung der Räder bzw. der an den Rändern angebrachten Targets aus mindestens zwei bekannten, unterschiedlichen Kamerapositionen wird der globale Maßstab auf die Räder bzw. auf die Messtargets an den Rädern übertragen und somit in die 3D-Rekonstruktion eingebracht. Somit kann der absolute Maßstab bestimmt werden, und erfindungsgemäß können die relevanten Fahrzeugparameter, insbesondere Sturz, Einzel- und/oder Gesamtspur, Radstand und Spurweite bestimmt werden.

In dem Beispiel der Figur 5(a) verfügt der Messkopf 4 über einen Lineargeber, der die Bildaufnahmeeinrichtung 24 von der Anfangsposition A' um einen definierten Weg in die Endposition E' bewegt.

In dem alternativen Beispiel der Figur 5(b) verfügt der Messkopf 4 über eine Rotiereinheit, durch welche die an einem Tragarm derselben angeordnete Bildaufnahmeeinrichtung 24 um einen definierten Winkel α um die Rotierachse gedreht werden kann. Dabei ist die Bildaufnahmeeinrichtung 24 insbesondere exzentrisch zur Rotierachse an dem Tragarm befestigt.

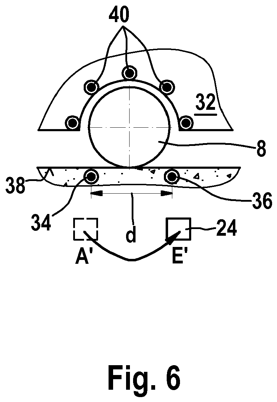

Figur 6 zeigt als Beispiel eine schematische Seitenansicht des linken Vorderrads 8, des das linke Vorderrad 8 umgebenden Bereichs der Karosserie 32 und von zwei Referenztargets 34, 36 an dem Messplatz sowie eine daneben angeordnete Bildaufnahmeeinrichtung 24.

Die Darstellung des Rads 8 und der Karosserie 32 stimmt mit der Darstellung gemäß Figur 5 überein. Wie in Figur 5, so erfolgt auch bei diesem Beispiel die eigentliche Vermessung durch die Messköpfe 2, 4, 14, 16, wie mit Bezug auf Figur 1 beschrieben, durch Aufnahmen der Räder 6, 8, 10, 12 oder der darauf angebrachten Targets durch die Messköpfe 2, 4, 14, 16 wenigstens in der Anfangslage A und in der Endlage E des Fahrzeugs 1, und die Bildaufnahmeeinrichtung 24 wird bei stehendem Fahrzeug 1 von einer Anfangsposition A' in eine Endposition E' bewegt. Dies ist in Figur 6 mit einem Pfeil angedeutet.

Zur Erhöhung der Genauigkeit oder wenn wenigstens eine der Positionen A' und E' nicht genau bekannt ist, können an dem Messplatz, beispielsweise an der Hebebühne, zwei weitere Referenzmarken 34 und 36 im Blickfeld der Bildaufnahmeeinrichtung 24 angeordnet werden, deren Abstand d zueinander der Auswerteeinrichtung bekannt ist.

Wenn in den beiden Positionen A' und E' zusätzlich zu der Aufnahme des Rads 8 oder des daran angebrachten Messtargets eine Aufnahme der Referenzmarken 34 und 36 erfolgt, kann der durch eine Bildauswertung bestimmbare Abstand d zwischen den beiden Referenzmarken 34 und 36 mit dem gespeicherten Referenzwert verglichen werden, und so kann der absolute Maßstab bestimmt werden. Dadurch können alle relevanten Fahrwerksvermessungsparameter, insbesondere Sturz, Einzel- und/oder Gesamtspur, Radstand und Spurweite ermittelt werden.

Mit anderen Worten kann der absolute Maßstab durch die beiden zusätzlichen Referenzmarken 34 und 36 eingeführt und in die 3D-Rekonstruktion eingebracht werden.

Die Genauigkeit der Bestimmungen des absoluten Maßstabs kann noch erhöht werden, wenn die Referenztargets 34 und 36 in mehreren Positionen der Bildaufnahmeeinrichtung 24 bei der Bewegung von der Position A' nach E' aufgenommen und ausgewertet werden. Diese Aufnahmen können gleichzeitig mit der Aufnahme des Rads 8 oder des daran angebrachten Messtargets erfolgen, so dass durch das Verfahren "structure from motion" alle Targets in einem gemeinsamen Koordinatensystem bestimmt werden können.

Die Verschiebung der wenigstens einen Bildaufnahmeeinrichtung 24 kann bei allen Varianten gemäß den Figuren 5a, 5b und 6 auch während der Bewegung des Fahrzeugs 1 erfolgen.

Beispielsweise kann die Verschiebung der Bildaufnahmeeinrichtung 24 von ihrer Anfangslage A' in ihre Endlage E' während des Verschiebens des Fahrzeugs 1 von seiner Anfangslage A in seine wenigstens eine weitere Lage E erfolgen. Wenn man nur zwei Aufnahmen an den Positionen A und E des Fahrzeugs 1 aufnimmt, bietet dieses Vorgehen eine Zeitersparnis. Während das Fahrzeug 1 von A nach E bewegt wird, ändert man auch schon gleichzeitig die Position der Bildaufnahmeeinrichtung 24 von ihrer Anfangslage A' in ihre Endlage E'. Alle Bildaufnahmen erfolgen bei stehendem Fahrzeug 1.

Wenn man mehr als zwei Positionen des Fahrzeugs 1 aufnimmt, um eine Bildsequenz auszuwerten und bewegt gleichzeitig auch die Bildaufnahmeeinrichtung 24 von A' nach E', so muss die Verschiebung der Bildaufnahmeeinrichtung 24 zu jedem Zeitpunkt und nicht nur an den Positionen A' und E' bekannt sein. Das ist bei den Verfahren gemäß Fig. 5a, 5b einfach möglich, wenn man die Mechanik und Messtechnik entsprechend auslegt. Bei dem Verfahren gemäß Figur 6. ist es dann möglich, wenn drei Referenzmarken vorhanden sind, deren Abstände untereinander bekannt sind.

## Patentansprüche

1. Verfahren zur Fahrwerksvermessung mit den folgenden Schritten:
Bereitstellen eines Fahrwerksvermessungssystems mit vier in bekannter Position zueinander angeordneten Messköpfen (2, 4, 14, 16), von denen jeder eine monokulare Bildaufnahmeeinrichtung (22, 24, 26, 28) aufweist, wobei die relative Position der Messköpfe (2, 4, 14, 16) zueinander bekannt ist
Aufnehmen jeweils eines Rades (6, 8, 10, 12) oder eines daran angebrachten Messtargets in einer Anfangslage (A) des Fahrzeugs (1) mit jedem der vier Messköpfe (2, 4, 14, 16);
Verschieben des Fahrzeugs (1) von der Anfangslage (A) in mindestens eine weitere Lage (E);
Aufnehmen jeweils eines Rades (6, 8, 10, 12) oder eines daran angebrachten Messtargets des in der weiteren Lage (E) stehenden Fahrzeugs (1) mit jedem der vier Messköpfe (2, 4, 14, 16);
Ermitteln des Reifenaufstandspunkts (39) als maßstabgebendes Element in wenigstens einer der Anfangslage (A) und der weiteren Lage (E) des Fahrzeugs (1) und Bestimmen eines absoluten Maßstabs für die Messköpfe (2, 4, 14, 16) unter Bestimmung des horizontalen Abstands (d) des Reifenaufstandspunkts (39) zur monokularen Bildaufnahmeeinrichtung (22, 24, 26, 28) aus deren Beobachtungswinkel (α) und deren Beobachtungshöhe (h);
Ausführen von lokalen 3D-Rekonstruktionen zum Bestimmen der Translationsvektoren (t1, t2, t3, t4), der Rotationsvektoren (R1, R2, R3, R4) und der Raddrehwinkel zwischen den mindestens zwei Lagen (A, E) sowie der Raddrehzentren und der Raddrehachsen der Räder (6, 8, 10, 12); und
Bestimmen der Fahrwerksvermessungsparameter des Fahrzeugs (1), insbesondere Sturz, Einzel- und/oder Gesamtspur, Radstand und Spurweite.

2. Vorrichtung zum Vermessen der Fahrwerksgeometrie eines Fahrzeugs (1), aufweisend:
eine Anordnung von vier in bekannter Position zueinander angeordneten Messköpfen (2, 4, 14, 16), von denen jeder eine monokulare Bildaufnahmeeinrichtung (22, 24, 26, 28) aufweist, die eingerichtet ist, im Betrieb ein Bild jeweils eines Rades (6, 8, 10, 12) oder eines daran angebrachten Messtargets des Fahrzeug (1) in einer Anfangslage (A) und in einer weiteren Lage (E) des Fahrzeugs (1) zu erfassen, und
eine Auswerteeinrichtung (18), die eingerichtet ist, im Betrieb aus den Bildern der Räder (6, 8, 10, 12) oder der daran angebrachten Messtargets in der Anfangslage (A) und in der weiteren Lage (E) des Fahrzeugs (1) die Translationsvektoren (t1, t2, t3, t4) und die Rotationsvektoren (R1, R2, R3, R4) der Räder (6, 8, 10, 12) zu bestimmen;
in einem Bild der Räder (6, 8, 10, 12) oder der daran angebrachten Messtargets den Reifenaufstandspunkt (39) als maßstabgebendes Element und dessen horizontalen Abstand (d) zur monokularen Bildaufnahmeeinrichtung (22, 24, 26, 28) aus deren Beobachtungswinkel (α) und deren Beobachtungshöhe (h) zu ermitteln und daraus einen absoluten Maßstabs für die Messköpfe (2, 4, 14, 16) zu bestimmen; und
die Fahrwerksvermessungsparameterdes Fahrzeugs (1), insbesondere Sturz, Einzel- und/oder Gesamtspur, Radstand und Spurweite zu bestimmen.

## Claims

1. Method for chassis measurement, comprising the following steps:
providing a chassis measuring system with four measuring heads (2, 4, 14, 16) arranged with a known position in relation to one another, each of which having a monocular image recording device (22, 24, 26, 28), wherein the relative position of the measuring heads (2, 4, 14, 16) in relation to one another is known;
respectively recording one wheel (6, 8, 10, 12), or a measurement target attached thereon, in an initial position (A) of the vehicle (1) with each one of the four measuring heads (2, 4, 14, 16);
displacing the vehicle (1) from the initial position (A) into at least one further position (E);
respectively recording one wheel (6, 8, 10, 12), or a measurement target attached thereon, of the vehicle (1) which is standing in the further position (E) with each one of the four measuring heads (2, 4, 14, 16);
establishing the centre of tyre contact (39) as scale-providing element in at least one of the initial position (A) and the further position (E) of the vehicle (1) and determining an absolute scale for the measuring heads (2, 4, 14, 16) while determining the horizontal distance (d) from the centre of tyre contact (39) to the monocular image recording device (22, 24, 26, 28) from the observation angle (α) thereof and the observation height (h) thereof;
performing local 3-D reconstructions for determining the translation vectors (t1, t2, t3, t4), the rotational vectors (R1, R2, R3, R4) and the wheel rotation angle between the at least two positions (A, E) and the wheel rotation centres and the wheel rotation axes of the wheels (6, 8, 10, 12); and
determining the chassis measurement parameters of the vehicle (1), in particular camber, individual and/or overall toe angle, wheelbase and track width.

2. Apparatus for measuring the chassis geometry of the vehicle (1), comprising:
an arrangement of four measuring heads (2, 4, 14, 16) arranged with a known position in relation to one another, each of which having a monocular image recording device (22, 24, 26, 28) configured during operation to capture an image of respectively one wheel (6, 8, 10, 12), or a measurement target of the vehicle (1) attached thereto, in an initial position (A) and in a further position (E) of the vehicle (1), and
an evaluation device (18) configured during operation to determine the translation vectors (t1, t2, t3, t4) and the rotational vectors (R1, R2, R3, R4) of the wheels (6, 8, 10, 12) from the images of the wheels (6, 8, 10, 12), or the measurement targets attached thereto, in the initial position (A) and in the further position (E) of the vehicle (1);
to establish the centre of tyre contact (39) as scale-providing element and the horizontal distance (d) thereof from the monocular image recording device (22, 24, 26, 28) in an image of the wheels (6, 8, 10, 12), or the measurement targets attached thereto, from the observation angle (α) thereof and the observation height (h) thereof and establish an absolute scale for the measuring heads (2, 4, 14, 16) therefrom; and
to determine the chassis measurement parameters of the vehicle (1), in particular camber, individual and/or overall toe angle, wheelbase and track width.

## Revendications

1. Procédé de mesurage d'un train de roulement, le procédé présentant les étapes suivantes :
préparation d'un système de mesurage de train de roulement présentant quatre têtes de mesure (2, 4, 14, 16) disposées en positions mutuelles connues et dont chacune présente un dispositif monoculaire (22, 24, 26, 28) d'enregistrement d'image, les positions relatives des têtes de mesure (2, 4, 14, 16) les unes par rapport aux autres étant connues,
avec chacune des quatre têtes de mesure (2, 4, 14, 16), enregistrement d'une roue (6, 8, 10, 12) ou d'une cible de mesure qui y est placée dans une position initiale (A) du véhicule (1),
déplacement du véhicule (1) de la position initiale (A) jusque dans au moins une autre position (E),
avec chacune des quatre têtes de mesure (2, 4, 14, 16), enregistrement de chaque roue (6, 8, 10, 12) ou d'une cible de mesure qui y est placée du véhicule (1) placé dans l'autre position (E),
détermination du point (39) d'appui au sol du bandage de roue comme élément de référence d'échelle dans la position initiale (A) et/ou dans l'autre position (E) du véhicule (1) et définition d'une échelle absolue pour les têtes de mesure (2, 4, 14, 16) par détermination de la distance horizontale (d) entre le point (39) d'appui au sol du bandage de roue et le dispositif monoculaire (22, 24, 26, 28) d'enregistrement d'image à partir de son angle d'observation (α) et de sa hauteur d'observation (h),
réalisation de reconstructions locales en trois dimensions pour déterminer les vecteurs de translation (t1, t2, t3, t4), les vecteurs de rotation (R1, R2, R3, R4) et l'angle de rotation des roues entre les deux ou plusieurs positions (A, E), ainsi que les centres de rotation des roues et les axes de rotation des roues (6, 8, 10, 12) et
détermination des paramètres de mesurage du train de roulement du véhicule (1), en particulier carrossage, piste individuelle et/ou piste totale, empattement et écartement des roues.

2. Ensemble de mesurage de la géométrique du train de roulement d'un véhicule (1), l'ensemble présentant :
un agencement des quatre têtes de mesure (2, 4, 14, 16) disposées dans des positions mutuelles connues, dont chacune présente un dispositif monoculaire (22, 24, 26, 28) d'enregistrement d'image conçu pour, en fonctionnement, saisir une image de chaque roue (6, 8, 10, 12) du véhicule (1) ou d'une cible de mesure qui y est placée, dans une position initiale (A) et dans une autre position (E) du véhicule (1) et
un dispositif d'évaluation (18) conçu pour, en fonctionnement, à partir des images de roue (6, 8, 10, 12) ou de la cible de mesure qui y est placée, déterminer dans la position initiale (A) et dans l'autre position (E) du véhicule (1) les vecteurs de translation (t1, t2, t3, t4) et les vecteurs de rotation (R1, R2, R3, R4) des roues (6, 8, 10, 12),
dans une image des roues (6, 8, 10, 12) ou des cibles de mesure qui y sont placées, déterminer le point (39) d'appui au sol des bandages de roue comme élément de référence d'échelle et leur distance horizontale (d) par rapport au dispositif monoculaire (22, 24, 26, 28) d'enregistrement d'image à partir de leur angle d'observation (α) et de leur hauteur d'observation (h), pour en déduire une échelle absolue pour les têtes de mesure (2, 4, 14, 16) et
déterminer les paramètres de mesurage du train de roulement du véhicule (1), en particulier carrossage, piste individuelle et/ou piste totale, empattement et écartement des roues.
